# EUROPÄISCHE PATENTANMELDUNG

(11) **EP 1 832 382 A2**
(43) Veröffentlichungstag der Anmeldung: **12.09.2007**
(21) Anmeldenummer: 07102149.7
(22) Anmeldetag: 12.02.2007
(51) Int. Cl.: B23P 11/00, F02M 61/16, C23C 18/32, B23K 20/16

(54) **Pressverband**

(30) Priorität: 09.03.2006 DE 102006011000
(71) Anmelder: SIEMENS AKTIENGESELLSCHAFT, 80333 München (DE)
(72) Erfinder: Anzinger, Claus, 93073 Neutraubling (DE); Schürz, Willibald, 93188 Pielenhofen (DE); Simmet, Martin, 93077 Bad Abbach (DE)
(74) Vertreter: Feichtner, Andreas

(57) **Zusammenfassung**

Pressverband (10) aus einem ersten Metallteil (12), das eine Ausnehmung (14) mit einer inneren Kontaktfläche (16) aufweist, und einem in der Ausnehmung (14) des ersten Metallteils (12) angeordneten zweiten Metallteil (18) mit einer äußeren Kontaktfläche (20). Die innere Kontaktfläche (16) des ersten Metallteils (12) ist mit der äußeren Kontaktfläche (20) des zweiten Metallteils (18) in Kontakt, und mindestens eine der Kontaktflächen (16, 20) weist eine Schicht (22) auf, die aus einem Material gebildet ist, das von dem Material des ersten Metallteils (12) und dem Material des zweiten Metallteils (18) verschieden ist und das Nickel oder Kupfer aufweist.

## Beschreibung

Die Erfindung betrifft einen Pressverband.

Es ist bekannt, auf zwei Metallteile Druck anzuwenden, wobei nach dem Ende der Druckanwendung eine feste Verbindung zwischen den beiden Metallteilen hergestellt ist. Ein derartig hergestellter Verband wird als Pressverband bezeichnet.

So zeigt die Offenlegungsschrift DE 27 26 107 A1 einen Pressverband aus einem ersten Metallteil und einem zweiten Metallteil, wobei das erste Metallteil eine Ausnehmung aufweist, in der das zweite Metallteil aufgenommen werden kann. Durch einen auf zumindest eines der Metallteile ausgeübten Druck erfolgt eine Relativbewegung der beiden Metallteile aufeinander zu, so dass schließlich eine feste Verbindung zwischen den beiden Metallteilen hergestellt ist.

Die Aufgabe der Erfindung ist es, einen Pressverband zu schaffen, der einfach herstellbar ist und eine gute Verbindung zwischen den im Pressverband vereinigten Metallteilen sicherstellt.

Die Aufgabe wird gelöst durch die Merkmale der unabhängigen Ansprüche. Vorteilhafte Ausgestaltungen der Erfindung sind in den Unteransprüchen gekennzeichnet.

Die Erfindung zeichnet sich aus durch einen Pressverband aus einem ersten Metallteil, das eine Ausnehmung mit einer inneren Kontaktfläche aufweist, und einem in der Ausnehmung des ersten Metallteils angeordneten zweiten Metallteil mit einer äußeren Kontaktfläche, wobei die innere Kontaktfläche des ersten Metallteils mit der äußeren Kontaktfläche des zweiten Metallteils in Kontakt ist, und mindestens eine der Kontaktflächen eine Schicht aufweist, die aus einem Material gebildet ist, das von dem Material des ersten Metallteils und dem Material des zweiten Metallteils verschieden ist und das Nickel oder Kupfer aufweist.

Erstes und zweites Metallteil können aus jedem beliebigen Metall oder aus jeder beliebigen Metalllegierung aufgebaut sein, das bzw. die sich jedoch von dem Material der auf das entsprechende Metallteil aufgebrachten Schicht unterscheidet. Erstes und zweites Metallteil können aus demselben Metall oder derselben Metalllegierung aufgebaut sein oder das erste und das zweite Metallteil können aus verschiedenen Metallen oder Metalllegierungen aufgebaut sein.

Dies ist vorteilhaft, da durch das Aufbringen der Schicht aus Nickel oder Kupfer auf eines der beiden Metallteile vor Ausbildung des Pressverbands beim Einschieben des zweiten Metallteils in die Ausnehmung des ersten Metallteils eine geringe Gleitreibung zwischen dem ersten und dem zweiten Metallteil erreichbar ist. Dies bedeutet, dass das zweite Metallteil leicht in die Ausnehmung des ersten Metallteils eingeschoben werden kann. Es ist so möglich, ein Abtragen von Partikeln von dem ersten oder dem zweiten Metallteil zu vermeiden. Erstes und zweites Metallteil können dann in bekannter Weise durch Aufbringen eines Drucks auf mindestens eines der beiden Metallteile miteinander verpresst werden. Der Pressverband aus erstem und zweitem Metallteil kann so sehr einfach und präzise herstellbar sein. Insbesondere kann ein gleichmäßiger, gut reproduzierbarer Kraftverlauf beim Fügen der beiden Metallteile erreicht werden. Außerdem ist es möglich, geringe Abweichungen bei der Positionierung der beiden Metallteile zueinander zu erreichen.

In einer vorteilhaften Ausführungsform der Erfindung ist die Schicht aus chemisch aufgebrachtem Nickel ausgebildet. Nickel ist chemisch einfach auf die Metallteile aufbringbar. Dies wird dadurch erreicht, dass die Metallteile in Bädern mit Nickelsalzen, Reduktionsmitteln und anderen Zusätzen eingelegt werden, und sich Nickel auf den Metallteilen abscheiden kann. Darüber hinaus zeichnet sich Nickel dadurch aus, dass es eine besonders geringe Gleitreibung zwischen dem ersten und dem zweiten Metallteil ermöglicht.

In einer weiteren besonders bevorzugten Ausführungsform der Erfindung ist eines der Metallteile aus einem Stahl gebildet. Damit wird ermöglicht, dass die guten Gleiteigenschaften zwischen den Metallteilen bei einem Aufbringen einer Schicht aus Nickel oder Kupfer auch auf Stahl anwendbar sind. Des Weiteren ermöglicht insbesondere die Schicht aus Nickel auf den Metallteilen aus Stahl, dass der Pressverband nach dem Verpressen gute Schweiß- und Löteigenschaften aufweist.

In einer weiteren besonders bevorzugten Ausführungsform der Erfindung hat die Schicht eine Dicke von einem bis zwanzig Mikrometer. Dies hat den Vorteil, dass es möglich ist, dass für die Schicht nur ein geringer Materialeinsatz erforderlich ist und damit geringe Kosten entstehen. Darüber hinaus ist es möglich, dass aufgrund der geringen Schichtdicke nur ein geringer Einfluss auf die Geometrie auch von Bauteilen hoher Präzision genommen wird.

Ausführungsbeispiele der Erfindung sind im Folgenden anhand der schematischen Zeichnungen näher erläutert.

Es zeigen:
Figur 1 einen Querschnitt durch einen Pressverband, und
Figur 2 einen Längsschnitt durch ein Einspritzventil mit einem Pressverband.

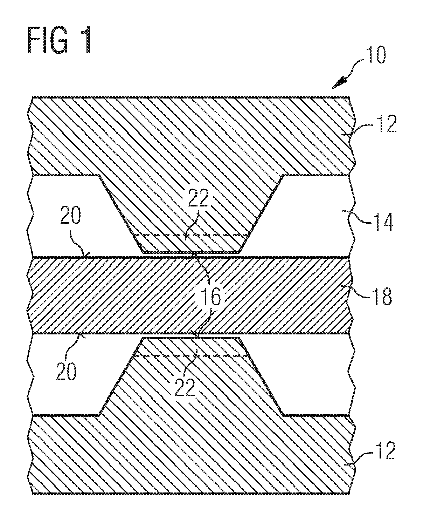

In Figur 1 ist in einer schematischen Ansicht ein Querschnitt durch einen Pressverband 10 gezeigt. Der Pressverband 10 weist ein erstes Metallteil 12 und ein zweites Metallteil 18 auf. Das erste Metallteil 12 hat eine Ausnehmung 14, in der das zweite Metallteil 18 angeordnet ist. Das erste Metallteil 12 hat eine innere Kontaktfläche 16 und das zweite Metallteil 18 eine äußere Kontaktfläche 20. Die innere Kontaktfläche 16 des ersten Metallteils 12 ist mit der äußeren Kontaktfläche 20 des zweiten Metallteils 18 in Kontakt.

Die innere Kontaktfläche 16 des ersten Metallteils 12 weist eine Schicht 22 auf. Die Schicht 22 ist aus einem Material gebildet, das sich von dem Material des ersten Metallteils 12 mit dem Material des zweiten Metallteils 18 unterscheidet und Nickel oder Kupfer ist. Durch das Aufbringen einer Schicht 22 aus Nickel auf eines der beiden Metallteile 12, 18 wird der Gleitwiderstand zwischen den Metallteilen 12, 18 deutlich reduziert.

Besonders vorteilhaft ist, wenn die Schicht 22 durch chemisches Vernickeln aufgebracht ist. Eine derartig aufgebrachte Schicht kann insbesondere eine Nickelphosphatschicht sein. Diese ist besonders einfach auf das erste Metallteil 12 aufbringbar.

In einer alternativen Ausführungsform kann anstatt der inneren Kontaktfläche 16 des ersten Metallteils 12 auch die äußere Kontaktfläche 20 des zweiten Metallteils 18 die Schicht 22 aufweisen. In einer weiteren alternativen Ausführungsform kann sowohl die inneren Kontaktfläche 16 des ersten Metallteils 12 als auch die äußere Kontaktfläche 20 des zweiten Metallteils 18 die Schicht 22 aufweisen.

Das erste Metallteil 12 und das zweite Metallteil 18 sind vorzugsweise aus einem Stahl gebildet. Eine Schicht 22 aus Nickel auf dem ersten Metallteil 12 und/oder dem ersten Metallteil 18 aus Stahl ermöglicht gute Gleiteigenschaften des entsprechenden Metallteils. Darüber hinaus kann eine Schicht 22 aus Nickel auf einem Metallteil aus Stahl die Schweiß- und/oder Löteigenschaften des Metallteils aus Stahl verbessern.

Wird nun das zweite Metallteil 18 in das erste Metallteil 12 eingebracht, so wird aufgrund der verbesserten Gleiteigenschaften zwischen den beiden Metallteilen 12, 18 die Gefahr eines Abtragens von Partikeln vom ersten Metallteil 12 und/oder vom zweiten Metallteil 18 vermindert und damit eine gute Führung des zweiten Metallteils 18 im ersten Metallteil 12 ermöglicht. Anschließend kann das erste Metallteil 12 in bekannter Weise mit dem zweiten Metallteil 18 verpresst werden.

Wird die Schicht 22 mit einer Dicke von circa eins bis zwanzig Mikrometer ausgeführt, so ist nur ein geringer Materialeinsatz an Nickel oder Kupfer erforderlich, wodurch die Kosten für das Material der Schicht 22 gering gehalten werden kann. Darüber hinaus wird durch die geringe Schichtdicke nur ein geringer Einfluss auf die Geometrie der Metallteile 12, 18 genommen. Besonders bevorzugt ist, wenn die Dicke der Schicht 22 3-5 µm beträgt, da so der Nickeleinsatz und damit die Materialkosten besonders gering gehalten werden können.

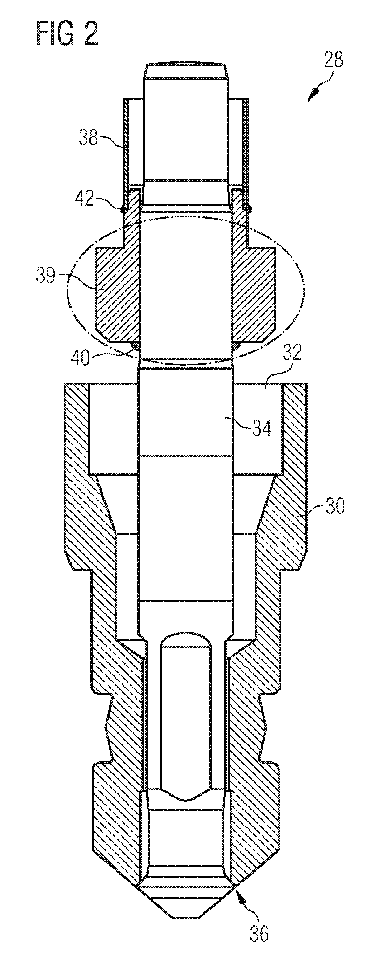

In Figur 2 ist eine Düsenbaugruppe 28 eines Einspritzventils dargestellt. Die Düsenbaugruppe 28 umfasst einen Düsenkörper 30 mit einer Düsenkörperausnehmung 32. In der Düsenkörperausnehmung 32 ist eine Düsennadel 34 angeordnet. Die Düsennadel 34 ist bereichsweise in der Düsenkörperausnehmung 34 geführt. An einem axialen Ende des Düsenkörpers 30 und der Düsennadel 34 ist zwischen dem Düsenkörper 30 und der Düsennadel 34 eine Einspritzöffnung 36 ausgebildet, mit der beispielsweise Kraftstoff in einen Brennraum einer dem Einspritzventil zugeordneten Brennkraftmaschine eines Fahrzeugs eingebracht werden kann. Die Düsennadel 34 ist mittels einer Düsenfeder so vorgespannt, dass sie einen Fluidfluss durch die Einspritzöffnung 36 verhindert, wenn keine weiteren Kräfte auf die Düsennadel 34 einwirken.

An dem der Einspritzöffnung 36 abgewandten Ende der Düsennadel 34 ist ein erstes Ringelement 38 und ein zweites Ringelement 39 angeordnet. Das erste Ringelement 38 kann vorzugsweise als Teil eines Dichtungselements, das zweite Ringelement 39 vorzugsweise als Düsenfederstützelement ausgebildet sein. Erstes Ringelement 38 und zweites Ringelement 39 können jedoch alternativ auch andere Bauteile der Düsenbaugruppe 28 sein. Das zweite Ringelement 39 und die Düsennadel 34 bilden einen Pressverband. Die Düsennadel 34 hat eine äußere Kontaktfläche, das zweite Ringelement 39 hat eine Ausnehmung mit einer inneren Kontaktfläche. Die Düsennadel 34 und/oder das zweite Ringelement 39 weisen an ihren dem jeweiligen anderen Element zugewandten Kontaktflächen eine Schicht aus Nickel auf.

Bei der Herstellung des Pressverbands kann das zweite Ringelement 39 mit geringer Gleitreibung einfach über die Düsennadel 34 geschoben werden und dann in bekannter Weise unter Ausübung eines Drucks auf das zweite Ringelement 39 mit der Düsennadel 34 zu einem Pressverband ausgebildet werden. Der Pressverband aus dem zweitem Ringelement 39 und der Düsennadel 34 kann dazu genutzt werden, eine besonders genaue Positionierung des zweiten Ringelements 39 gegenüber der Düsennadel 34 zu erreichen.

An dem der Einspritzöffnung 36 zugewandten Ende des zweiten Ringelements 39 ist eine erste Schweißnaht 40 ausgebildet. Mit der ersten Schweißnaht 40 ist eine Verbesserung der Kopplung zwischen dem zweiten Ringelement 39 und der Düsennadel 34 möglich. Anstelle der ersten Schweißnaht 40 kann auch eine Lötnaht ausgebildet sein. Durch die Schicht 22 aus Nickel auf der Düsennadel 34 oder auf dem zweiten Ringelement 39 ist es möglich, die Schweiß- und/oder Löteigenschaften der Düsennadel 34 und/oder des zweiten Ringelements 39 zu verbessern.

Das erste Ringelement 38 ist durch eine zweite Schweißnaht 42 mit dem zweiten Ringelement 39 gekoppelt. Die Herstellung der zweiten Schweißnaht 42 auf dem zweiten Ringelement 39 ist durch das Aufbringen der Schicht aus Nickel auf dem zweiten Ringelement 39 verbessert.

## Patentansprüche

1. Pressverband (10) aus
- einem ersten Metallteil (12), das eine Ausnehmung (14) mit einer inneren Kontaktfläche (16) aufweist, und
- einem in der Ausnehmung (14) des ersten Metallteils (12) angeordneten zweiten Metallteil (18) mit einer äußeren Kontaktfläche (20),
wobei die innere Kontaktfläche (16) des ersten Metallteils (12) mit der äußeren Kontaktfläche (20) des zweiten Metallteils (18) in Kontakt ist, und mindestens eine der Kontaktflächen (16, 20) eine Schicht (22) aufweist, die aus einem Material gebildet ist, das von dem Material des ersten Metallteils (12) und dem Material des zweiten Metallteils (18) verschieden ist und das Nickel oder Kupfer aufweist.

2. Pressverband (10) nach Anspruch 1, **dadurch gekennzeichnet, dass** die Schicht (22) aus chemisch aufgebrachtem Nickel gebildet ist.

3. Pressverband (10) nach Anspruch 1 oder Anspruch 2, **dadurch gekennzeichnet, dass** mindestens eines der Metallteile (12, 18) aus einem Stahl gebildet ist.

4. Pressverband (10) nach einem der vorhergehenden Ansprüche, **dadurch gekennzeichnet, dass** die Schicht (22) eine Dicke von 1 bis 20 Mikrometer hat.
